# EUROPEAN PATENT SPECIFICATION

(11) **EP 1 506 545 B1**
(45) Date of publication and mention of the grant of the patent: **28.05.2008**
(21) Application number: 03713028.3
(22) Date of filing: 24.03.2003
(51) Int. Cl.: G11B 7/007, G11B 7/004, G11B 20/18

(54) **OPTICAL DISC AND METHOD FOR RECORDING DATA ON THE SAME**
OPTISCHER DATENTRÄGER UND VERFAHREN ZUM AUFZEICHNEN VON DATEN AUF DIESEM
DISQUE OPTIQUE ET PROCEDE D'ENREGISTREMENT DE DONNEES SUR CE DISQUE

(30) Priority: 20.05.2002 KR 2002027951; 26.10.2002 KR 2002065673
(43) Date of publication of application: 16.02.2005
(73) Proprietor: SAMSUNG ELECTRONICS CO., LTD., Suwon-si Gyeonggi-do 442-742 (KR)
(72) Inventor: LEE, Kyung-Geun, Seongnam-si Gyeonggi-do 463-050 (KR); PARK, In-Sik, Suwon-si Gyeonggi-do 442-470 (KR); YOON, Du-Seop, Gwonseon-gu Suwon-si Gyeonggi-do 441-450 (KR); SHIM, Jae-Seong, Gwangjin-gu Seoul 143-191 (KR)
(74) Representative: Robinson, Ian Michael
(86) International application number: PCT/KR2003/000570
(87) International publication number: WO 2003/098609

(56) References cited:
- EP-A- 0 472 343
- EP-A- 0 655 740
- EP-A- 0 893 794
- EP-A- 1 045 391
- EP-A- 1 047 070
- EP-A- 1 052 639
- KR-A- 20000 075 374
- KR-A- 20010 027 954
- US-B1- 6 338 153
- "Standard ECMA-274: Data Interchange on 120 mm Optical Disk using +RW Format - CAPACITY: 3,0 GBYTES AND 6,0 GBYTES" STANDARD ECMA-274, June 1999 (1999-06), pages 35-39, XP002217338

## Description

### Technical Field

The present invention relates to an optical disc and a method for recording data on the same, and more particularly, to an optical disc in which linking at a portion in which recording starts is defined and a method for recording data on the optical disc.

### Background Art

In general, optical discs are widely adopted as data recording media of an optical pickup system for non-contact type recording/reproducing. They are classified into compact discs (CDs) and digital versatile discs (DVDs) depending on data recording capacity. Examples of optical discs capable of reading, recording, or erasing include 650 MB CD-Recordable (CD-R), CD-Rewritable (CD-RW), 4.7GB DVD+RW. In addition, High Definition-DVD (HD-DVD) with recording capacity of 23GB is currently being developed.

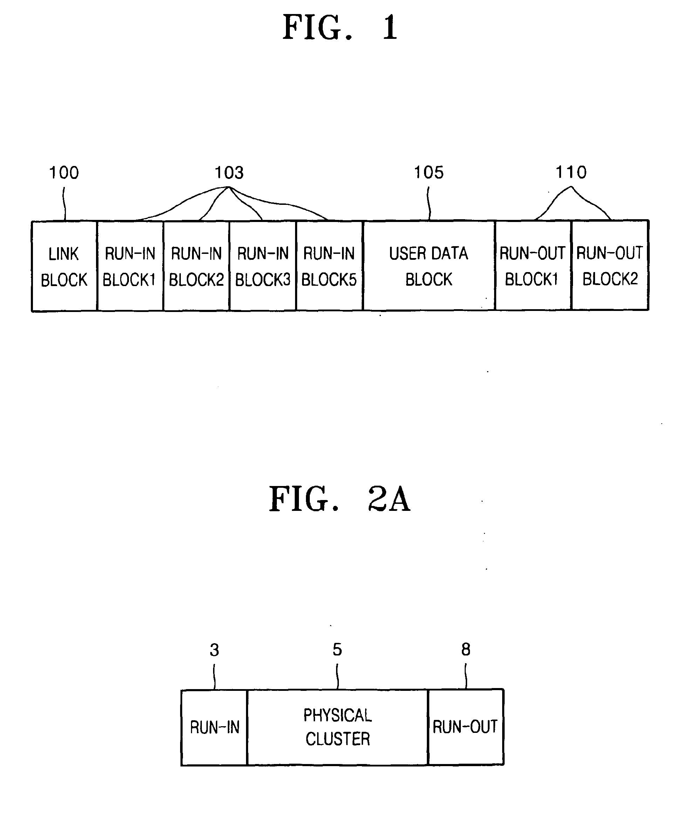

In the case of a CD-RW that can be rewritten, a packet is the basic recording unit comprised of a predetermined block of data, the structure of which is shown in FIG. 1. The packet contains a plurality of run-in blocks 103 and run-out blocks 110 preceding and following a user data block 105 in which the user data is recorded. A link block 100 is located at the beginning of the basic recording unit enabling continuous recording. If the user data block 105 contains a defective region in which recording cannot be performed, recording has to be completed before the defective region. However, in order to handle the occurrence of such a defective region, no definitions or standards for a method for recording/reproducing over an optical disc or the structure of the disc using the same are not available. Thus, it is likely that a method in which defective regions are handled varies by each manufacturer of optical disc recorders/reproducers. This raises the concerns over compatibility between disc drives. This problem may commonly occur in CD, DVD, and HD-DVD families, which calls for a need for standardization of optical discs.

The applicant of this patent application has disclosed under Korean Patent Laid Open No. 2000-75374 a method for handling a defective region on a DVD-RW disc in which a predetermined linking scheme is applied immediately after the defective region and a recording medium using the same.

However, in the case of optical discs (HD-DVDs) with recording capacity of 20 GB or more, there are no definitions for a method for recording capable of effectively dealing with continuous recording or overwriting or occurrence of defective region and the structure of a disc using the same. Thus, this may cause compatibility problems in disc drives as described above, which may lead to unstable recording/reproducing operation. Thus, it is highly required to have a new definition or standard for a method for recording a disc and a disc structure using the same capable of effectively dealing with continuous recording or overwriting or occurrence of defective-regions.

ECMA-274 "Data Interchange on 120mm Optical Disk using +RW Format - Capacity: 3,0 Gbytes and 6,0 Gbytes" discloses linking of continuously written physical sectors. This document forms the pre-characterising portion of the claims appended hereto.

### Disclosure of the Invention

The present invention provides a method for recording data on an optical disc as defined in the appended claims.

### Brief Description of the Drawings

The above and other features and advantages of the present invention will become more apparent by describing in detail preferred embodiments thereof with reference to the attached drawings in which:
FIG. 1 shows the structure of a basic recording unit applied to a conventional CD-RW;
FIG. 2A shows a structure in which data is recorded in a single physical cluster;
FIG. 2B shows a recording structure in which data is sequentially recorded in a plurality of physical clusters;
FIG. 3A shows a portion of an optical disc on which data is to be sequentially recorded according to a preferred embodiment of the present invention;
FIG. 3B shows an optical disc and a method for recording data on the optical disc according to a preferred embodiment of the present invention;
FIG. 4A shows a portion of an optical disc in which data is to be continuously recorded according to another preferred embodiment of the present invention;
FIG. 4B shows an optical disc and a method for recording data on the optical disc according to another preferred embodiment of the present invention;
FIG. 5A shows a data structure in the case where defects are generated due to an address or ID error; and
FIG. 5B is diagram illustrating a linking implementation method in the case where defects are generated due to an address or ID error.

### Best mode for carrying out the Invention

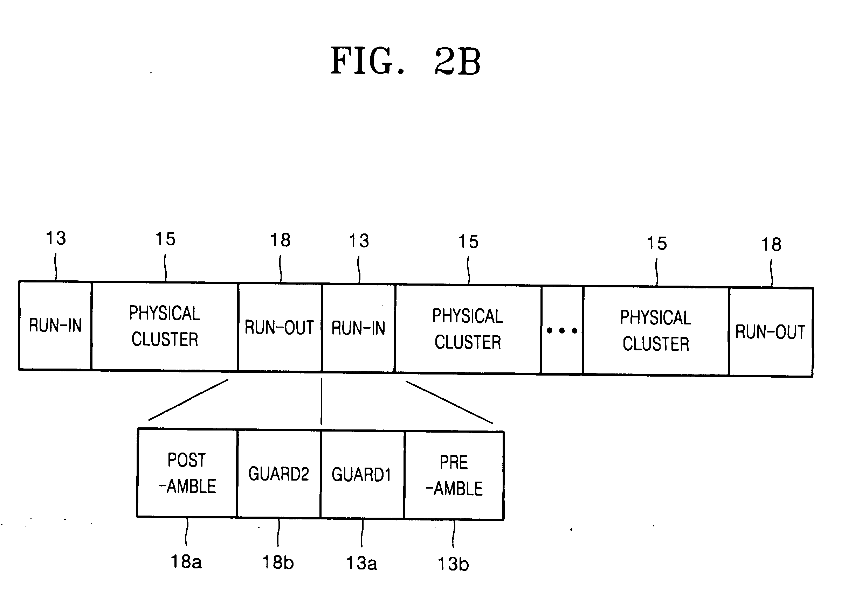

FIG. 2A shows a structure in which data is recorded in a single physical cluster 5 of an optical disc capable of recording and/or reproducing data. FIG. 2B shows a structure in which data is continuously recorded in a plurality of physical clusters 15. The physical clusters 5 and 15 contains 32 data frames with a capacity of 2KB each, a sink frame indicating a sink, data for controlling DC offset, and an error correction code (ECC) for correcting errors. Here, ECC may be composed of 64KB.

Run-ins 3 and 13 and run-outs 8 and 18 are defined before and after the physical clusters 5 and 15, respectively. The run-ins 3 and 13 and the run-outs 8 and 18 allows data to be recorded precisely on the physical clusters 5 and 15 during recording/reproducing of data. That is, if data is written to the run-ins 3 and 13 or the run-outs 8 and 18 deviating from the precise place, when data recording starts within a predetermined allowable range, this helps to correct errors thus enabling data to be recorded seamlessly.

The run-in 13 may contain a guard1 13a having a predetermined pattern for overcoming overwriting due to inaccuracy or changes in a recording start point and a pre-amble 13b for signal processing such as locking or synchronizing. The run-out 18 may be composed of a post-amble 18a for signal processing and a guard2 18b for solving overwriting due to variations in the recording start point. Eventually, the guard113a and the guard 18b serve as a buffer for protecting user data. Data recording ends in the last run-out 18 of a recording area.

Here, although a physical cluster has been described as the smallest recording unit on which user data is recorded, the example of smallest recording unit may include a sector, an ECC block, and a frame.

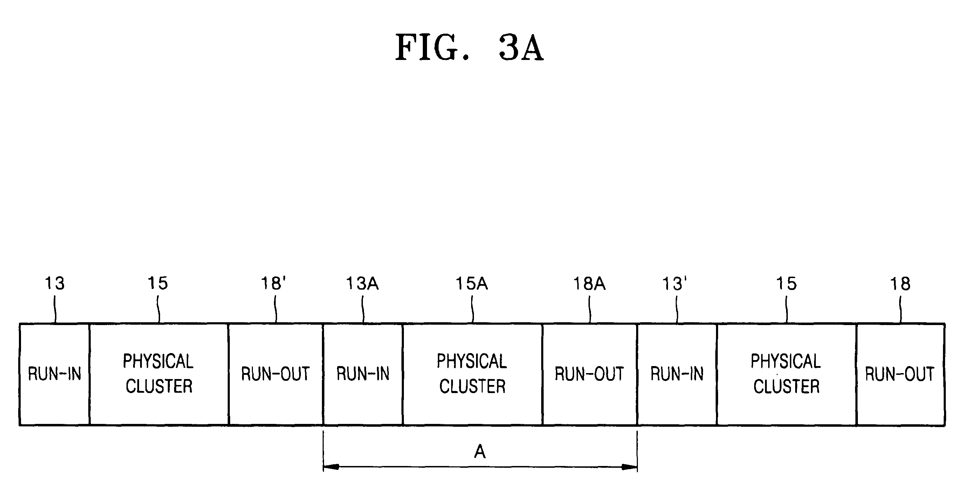

FIG. 3A shows an example in which data is recorded on an area denoted by A following the plurality of physical clusters 15 on which data has been recorded. Here, the area A may be a blank area on which no data is recorded or an area in which data has been recorded. In the latter case, data is recorded over the existing data.

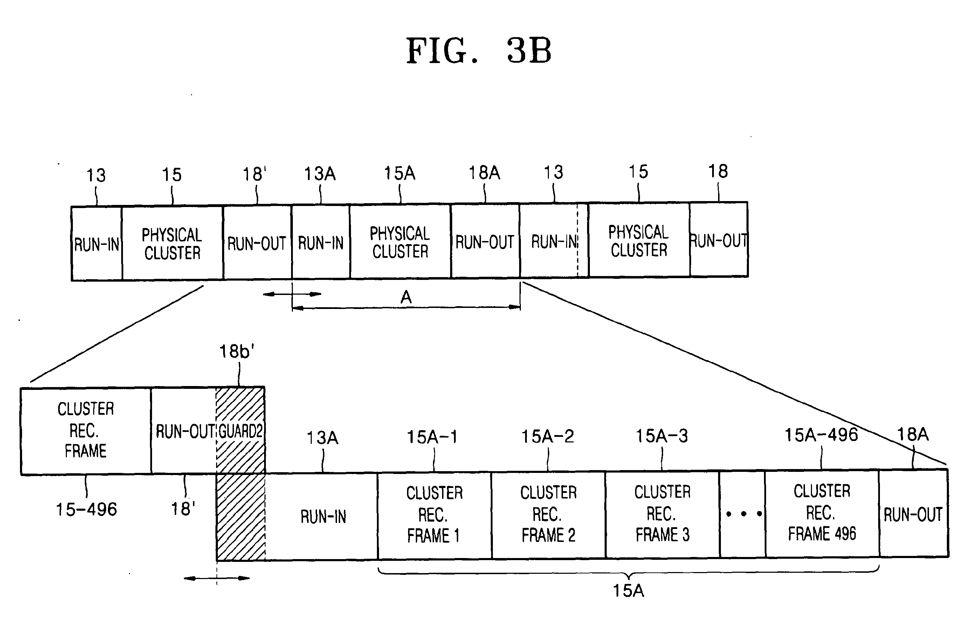

As described above, each physical cluster 15 is preceded and followed by the run-in 13 and the run-out 18, respectively. A run-in, a physical cluster, and a run-out in the area denoted by A are represented by 13A, 15A, and 18A, respectively. According to a method for recording data on an optical disc according to an embodiment of this invention, as shown in FIG. 3B, linking occurs between the run-in 13A at the beginning of the area A on which recording is to be performed and a run-out 18' preceding the run-in 13A.

Linking enables data to be recorded seamlessly if a drive cannot find a location to be recorded when data starts to be recorded on an area of the disc so data is recorded on a portion of the run-out 18' or a portion of the neighboring run-in 13A. In this case, linking occurs in such a way that error is corrected by recording data on the relevant area of the run-out 18' or run-in 13A. That is, linking is performed by correcting error if data is not recorded at an accurate recording start point upon continuous recording. Occurrence of linking is indicated by an arrow between the run-out 18' and the run-in 13A.

For example, a guard2 18b' in the run-out 18' may have a length of 300 channel bits or more and be composed of a pattern containing at least 3T and 5T. Here, 3T or 5T denotes the length of a mark recorded on the disc.

As described above, linking performed between the run-out 18' preceding the area A on which data is to be recorded and the run-in 13A enables continuous recording or overwriting. After linking has been performed, recording starts on the physical cluster 15A following the run-in 13A. The end of recording is represented by recording data have a pattern different from that of a neighboring guard2, in a guard2 in the last run-out 18A of an area to be recorded.

Here, the physical cluster 15A may be composed of 496 recording frames 15A-1, 15A-2 ...15A-496 following the run-in 13A. A 496-th recording frame 15-496 of the physical cluster 15 is followed by the run-out 18'.

Although recording has been done in the single physical cluster 15A according to the above embodiment of this invention, the same applies also to sequential recording on a plurality of physical clusters. That is, when continuous recording or overwriting is done on a plurality of physical clusters, linking is performed between a run-in at the beginning of an area on which recording starts and a run-out. This recording method may apply to both cases in which recording is done continuously on a blank area next to the pre-recorded area, on which no previous recorded data is available, and in which overwriting is done on a portion of an area on which previous data has been recorded.

The feature of an optical disc recorded according to the embodiment described above is that linking occurs between the run-out 18' preceding the area A to be recorded and the run-in 13A. Another feature is that the end of recording is indicated by recording so that the guard2 of the last run-out 18A on the recording area A may have a pattern different from that of a neighboring guard2.

An optical disc and a method for recording data on the optical disc according to another embodiment of the present invention will now be described.

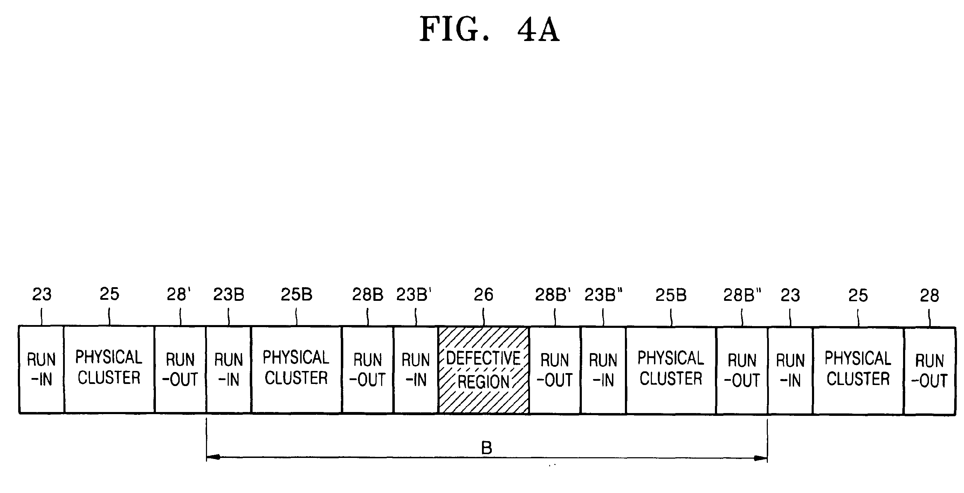

FIG. 4A shows an optical disc capable of recording/reproducing containing a defective region 26 on which data recording/reproducing cannot be done when data is recorded/reproduced in a plurality of physical clusters 25 on the disc. In this case, an address of the defective region 26 is stored in a defect list region. The defective region 26 includes one discovered upon verifying the disc as well as one upon recording/reproducing data. A run-in 23 and a run-out 28 are specified before and after the physical cluster 25, respectively to enable accurate data recording. The run-in 23 may contain a guard1 of a predetermined pattern or overcoming overwriting due to inaccuracy or changes in a data recording start point and a pre-amble for signal processing such as locking or synchronizing. The run-out 28 may be composed of a post-amble for signal processing and a guard2 of a predetermined pattern for eliminating overwriting due to variations in the recording start point.

The optical disc recording method according to this embodiment is applied to a case in which recording is performed on the optical disc containing the defective region 26 as described above. In FIG. 4A, an area to be recorded is denoted by B. a run-in, a physical cluster, and a run-out of the recording area B are denoted by the respective reference numerals to which the character B is appended. Here, recording means recording done continuously on a blank area next to the pre-recorded area, on which no previous recorded data is available, and overwriting done on an area on which previous data has been recorded.

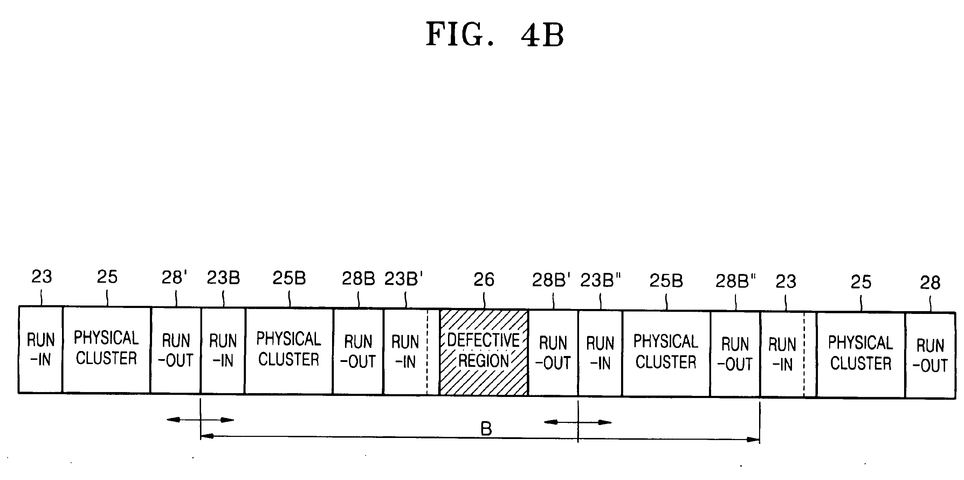

First, as shown in FIG. 4B, linking occurs between a run-out 28' preceding the recording area B and a run-in 23B so that recording can start. This linking is performed before a physical cluster 25B so that error is corrected within a predetermined allowable range if the disc fails to find an accurate recording start point when the recording starts. Occurrence of linking is indicated by an arrow in FIG. 4B. Since the same as described with reference to FIG. 3B applies to this linking, a detailed description thereof will be omitted.

Next, since recording cannot be continuously done on the defective region 26, recording end data indicative of the end of recording is written to the run-out 28B preceding the defective region 26. The recording end data can be written to the guard2 so that it has a pattern different from that of a neighboring guard2.

Subsequently, when recording resume after the defective region 26, linking occurs between a run-out 28B' and a run-in 23B" following the defective region 26. The linking is performed in the same manner as described above. In FIG. 4B, occurrence of linking is indicated by an arrow between the run-out 28B' and the run-in 23B". Furthermore, recording end data can be written by recording a guard2 of the last run-out 28B" on the recording area B to have a pattern different from that of a neighboring guard2.

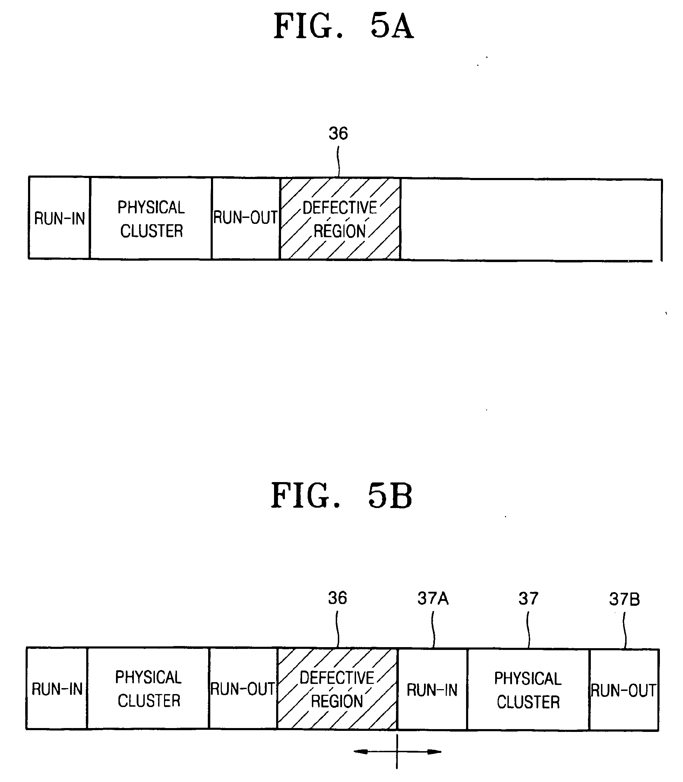

In particular, defective areas may be generated at an optical disc capable of recording and/or reproducing due to address error or ID error. For example, if there is an address or ID error when recording is performed for the first time using a blank disc, run-ins and run-outs are not generated at a defective region 36, as shown in FIG. 5A. FIG. 5A shows a state in which recording is not performed after the defective region 36. Referring to FIG. 5B, when recording is performed after the defective region 36, a run-in 37A and a run-out 37B are provided before and after a physical cluster 37 after the defective region 36. Preferably, linking is performed between a tail of the defective region 36 and a run-in 37A following after the defective region 36.

Defects due to such an address or ID error may be generated at the time of verifying discs. Also, defects may be generated when recording is performed on a blank disc with disc verification skipped. Unlike defects due to other causes, the defects due to an address or ID error do not generate run-ins and run-outs because no data is recorded on the defective region. Thus, there is a demand for different methods for treating defective regions due to the address or ID error from methods for treating defective regions due to another errors. In this case, as shown in FIG. 5B, linking is made to occur between a tail of the defective region 36 and a run-in 37A following after the defective region 36. Also, the guard2 in the last run-out 37B where recording is terminated is recorded to have a pattern different from that of a neighboring guard2, thereby performing recording of recording end data.

The present invention provides an optical disc recorded by the recording method as described above. Referring to FIGS. 3B and 4B, the optical disc according to the present invention is designed so that linking occurs between run-out 18' or 28' preceding the recording area A or B and the run-in 13A or 23B, respectively, when recording resumes after having recorded data. Here, recording means both cases in which recording is done continuously on a blank area next to the pre-recorded area, on which no previous recorded data is available, and in which overwriting is done on a portion of an area on which previous data has been recorded. The recording end data indicative of the end of recording is written before the defective region 26.

Furthermore, in the optical disc, linking also occurs between the run-out 28B' and the run-in 23B" following the defective region 26, and recording ends in the last run-out 28B" of the recording area A and B. In this case, recording end data can be indicated by recording the guard2 of the last run-outs 18A and 28B" to have a pattern different from that of a neighboring guard2.

Defective regions may be generated due to such an address or ID error. In this case, as shown in FIG. 5A, run-ins and run-outs are not generated at the defective region 36. A reliable physical cluster 37 is provided after the defective region 36, and the run-in 37A and the run-out 37B are provided before and after the physical cluster 37, respectively. In this case, linking is preferably performed between a tail of the defective region 36 and the run-in 37A after the defective region 36.

When recording/reproducing on the optical disc according to the present invention, a light source having a wavelength of 900 nm or less or more preferably a light source of a blue wavelength is used. An objective lens with a numerical aperture (NA) of 0.4-1.3 or more preferably an objective lens with an NA of 0.7-1.3 is used. In addition, the track pitch of the disc is 1.6 µm or less or more preferably 0.35 µm or less. The smallest recording mark has a length of 1 µm or less or more preferably 0.2 µm or less. The smallest recording unit may have a size more than 2KB.

As described above, a system in which linking occurs upon continuous recording or overwriting of data over an optical disc, or occurrence of a defective region is defined and recording end data is recorded at an appropriate position, thereby ensuring more stable and reliable data recording/reproducing.

Furthermore, a data structure as shown in FIGS. 2A and 2B can be used as one for rewritable discs, write-once discs, or ROM discs which are read-only media.

### Industrial Applicability

An optical disc and a method for recording data on the optical disc according to the present invention is defined so that linking occurs before an area in which recording starts upon continuous recording or overwriting, or after the defective region upon recording over an area containing a defective region, thus enabling stable recording/reproducing of data.

Furthermore, data indicative of the end of recording is recorded on a run-out preceding a defective region in an optical disc containing the defective region, and recording ends in the last run-out of an area on which continuous recording or overwriting is performed. Standard for handling continuous recording, overwriting, and defective region in an optical disc on which data is recorded is provided to ensure compatibility of a disc recording/reproducing apparatus thus improving reliability of recording/reproducing over the optical disc.

In addition, a data structure as shown in FIG. 2A and 2B has advantage of being used as one for rewritable discs, write-once discs, or ROM discs which are read-only media, thus maintaining consistency in data structure in terms of physical format of discs.

## Claims

1. A method for recording data on an optical disc capable of recording and reproducing data, the method comprising the step of:
performing linking before a physical cluster;
**characterised in that**:
the physical cluster is a physical cluster in which continuous recording starts to be performed, when recording resumes after having recorded data; and
a run-in and a run-out are provided before and after the physical cluster, respectively, for accurately recording data, and linking occurs between the run-in and a run-out preceding the physical cluster in which recording starts.

2. The method of claim 1, wherein data indicative of an end of recording is recorded in the last run-out of an area on which recording is to be performed.

3. The method of claim 2, wherein the run-in and the run-out contain guard1 and guard2 for protecting user data, respectively, and the guard2 of the last run-out is recorded to have a pattern different from a neighboring guard2.

4. The method of claim 1, 2, or 3, wherein the recording is continuously performed on a blank area next to a pre-recorded area on which no previous data has been recorded.

5. The method of claim 1, 2, or 3, wherein the recording is performed by overwriting data on a portion of an area on which previous data has been recorded.

6. The method of claim 1, wherein:
linking is performed between a run-in and a run-out located before the physical cluster following a defective region when a recording area contains the defective region on which recording cannot be performed.

7. The method of claim 6, wherein the run-in and the run-out contain guard1 and guard2 for protecting user data.

8. The method of claim 7, wherein the end of recording is indicated by making a pattern of the guard2 of the run-out preceding the defective region different from that of a neighboring guard2.

9. The method of any one of claims 7 to 8, wherein the end of recording is indicated by recording the guard2 of the run-out following the last physical cluster on which data recording ends so that the guard2 may have a pattern different from that of a neighboring guard2.

10. The method of any one of claims 6 to 9, wherein the data recording is continuously performed on a blank area next to a pre-recorded area on which no previous data has been recorded.

11. The method of any one of claims 7 to 9, wherein the recording is performed by overwriting data on a portion of an area on which previous data has been recorded.

12. The method of claim 1, wherein in a case where a defective region is generated due to an address or an ID error, the method comprises performing linking instead between a tail of the defective region and a run-in of a physical cluster after the defective region.

13. The method of any preceding claim, wherein the optical disc is one of a rewritable disc or a write-once disc.

## Patentansprüche

1. Verfahren zum Aufzeichnen von Daten auf einer optischen Platte, die in der Lage ist, Daten aufzuzeichnen und wiederzugeben, wobei das Verfahren folgenden Schritt umfasst:
Ausführen einer Verknüpfung vor einem physikalischen Cluster;
**dadurch gekennzeichnet, dass**:
der physikalische Cluster ein physikalischer Cluster ist, bei dem eine kontinuierliche Aufzeichnung begonnen wird, wenn die Aufzeichnung nach der Aufzeichnung von Daten wiederaufgenommen wird; und
ein Einlauf sowie ein Auslauf vor bzw. nach jedem physikalischen Cluster vorgesehen sind, um Daten präzise aufzuzeichnen, und ein Verknüpfen zwischen dem Einlauf und dem Auslauf erfolgt, der dem physikalischen Cluster vorausgeht, in dem die Aufzeichnung beginnt.

2. Verfahren nach Anspruch 1, bei dem Daten, die für ein Ende der Aufzeichnung kennzeichnend sind, im letzten Auslauf eines Bereiches aufgezeichnet werden, auf dem die Aufzeichnung erfolgen soll.

3. Verfahren nach Anspruch 2, bei dem der Einlauf und der Auslauf guard1 bzw. guard2 beinhalten, um Benutzerdaten zu schützen, und guard2 des letzten Auslaufes so aufgezeichnet wird, dass es ein Muster hat, das sich von einem benachbarten guard2 unterscheidet.

4. Verfahren nach Anspruch 1, 2 oder 3, bei dem die Aufzeichnung kontinuierlich auf einem freien Bereich in der Nähe eines voraufgezeichneten Bereiches erfolgt, auf dem keine vorausgehenden Daten aufgezeichnet wurden.

5. Verfahren nach Anspruch 1, 2 oder 3, bei dem die Aufzeichnung durch Überschreiben von Daten auf einem Abschnitt eines Bereiches ausgeführt wird, auf dem vorausgehende Daten aufgezeichnet wurden.

6. Verfahren nach Anspruch 1, bei dem:
des Verknüpfen zwischen einem Einlauf und einem Auslauf, der sich vor dem physikalische Cluster befindet, auf einen fehlerhaften Bereich folgend ausgeführt wird, wenn ein Aufzeichnungsbereich den fehlerhaften Bereich enthält, auf dem eine Aufzeichnung nicht ausgeführt werden kann.

7. Verfahren nach Anspruch 6, bei dem der Einlauf und der Auslauf guard1 und guard2 enthalten, die Benutzerdaten schützen.

8. Verfahren nach Anspruch 7, bei dem das Ende der Aufzeichnung **gekennzeichnet** wird, indem ein Muster von guard2 des Auslaufes, der dem fehlerhaften Bereich vorausgeht, anders als jenes eines benachbarten guard2 ausgebildet wird.

9. Verfahren nach einem der vorhergehenden Ansprüche 7 bis 8, bei dem das Ende der Aufzeichnung **dadurch gekennzeichnet** wird, dass guard2 des Auslaufes, der dem letzten physikalischen Cluster folgt, auf dem die Datenaufzeichnung endet, so aufgezeichnet wird, dass guard2 ein Muster haben kann, das sich von jenem eines benachbarten guard2 unterscheidet.

10. Verfahren nach einem der Ansprüche 6 bis 9, bei dem die Datenaufzeichnung kontinuierlich auf einem freien Bereich in der Nähe eines voraufgezeichneten Bereiches ausgeführt wird, auf dem keine vorherigen Daten aufgezeichnet wurden.

11. Verfahren nach einem der Ansprüche 7 bis 9, bei dem die Aufzeichnung durch Überschreiben von Daten auf einem Abschnitt eines Bereiches erfolgt, auf dem vorherige Daten aufgezeichnet wurden.

12. Verfahren nach Anspruch 1, bei dem ein einem Fall, in dem ein fehlerhafter Bereich infolge eines Adress- oder eines ID-Fehlers erzeugt wird, das Verfahren anstelle dessen die Ausführung einer Verknüpfung zwischen einem Ende des fehlerhaften Bereiches und einem Einlauf eines physikalischen Clusters nach dem fehlerhaften Bereich umfasst.

13. Verfahren nach einem der vorhergehenden Ansprüche, bei dem die optische Platte eine wiederbeschreibbare oder eine einmal beschreibbare Platte ist.

## Revendications

1. Procédé d'enregistrement de données sur un disque optique capable d'enregistrer et de reproduire des données, le procédé comprenant l'étape consistant à :
réaliser une liaison avant une grappe physique;
**caractérisé en ce que**:
la grappe physique est une grappe physique dans laquelle l'enregistrement continu commence à être réalisé, lorsque l'enregistrement reprend après avoir enregistré des données ; et
un début d'exécution et une fin d'exécution sont fournis avant et après la grappe physique, respectivement, pour enregistrer avec précision des données, et la liaison se produit entre le début d'exécution et la fin d'exécution précédant la grappe physique dans laquelle l'enregistrement commence.

2. Procédé selon la revendication 1, dans lequel des données indicatives d'une fin d'enregistrement sont enregistrées dans la dernière fin d'exécution d'une zone sur laquelle l'enregistrement doit être réalisé.

3. Procédé selon la revendication 2, dans lequel le début d'exécution et la fin d'exécution contiennent garde1 et garde2 pour protéger des données d'utilisateur, respectivement, et le garde2 de la dernière fin d'exécution est enregistré pour avoir un motif différent d'un garde2 voisin.

4. Procédé selon la revendication 1, 2 ou 3, dans lequel l'enregistrement est réalisé en continu sur une zone vierge proche d'une zone préenregistrée sur laquelle aucune donnée précédente n'a été enregistrée.

5. Procédé selon la revendication 1, 2 ou 3, dans lequel l'enregistrement est réalisé en écrasant des données sur une partie d'une zone sur laquelle des données précédentes ont été enregistrées.

6. Procédé selon la revendication 1, dans lequel :
la liaison est réalisée entre un début d'exécution et une fin d'exécution située avant la grappe physique à la suite d'une région défectueuse lorsqu'une zone d'enregistrement contient la région défectueuse dans laquelle l'enregistrement ne peut pas être réalisé.

7. Procédé selon la revendication 6, dans lequel le début d'exécution et la fin d'exécution contiennent garde1 et garde2 pour protéger des données d'utilisateur.

8. Procédé selon la revendication 7, dans lequel la fin de l'enregistrement est indiquée en réalisant un motif du garde2 de la fin d'exécution précédant la région défectueuse différent de celui d'un garde2 voisin.

9. Procédé selon l'une quelconque des revendications 7 à 8, dans lequel la fin de l'enregistrement est indiquée par l'enregistrement du garde2 de la fin d'exécution suivant la dernière grappe physique sur laquelle l'enregistrement de données se termine de sorte que le garde2 peut avoir un motif différent de celui d'un garde2 voisin.

10. Procédé selon l'une quelconque des revendications 6 à 9, dans lequel l'enregistrement de données est réalisé en continu sur une zone vierge proche d'une zone préenregistrée sur laquelle aucune donnée précédente n'a été enregistrée.

11. Procédé selon l'une quelconque des revendications 7 à 9, dans lequel l'enregistrement est réalisé en écrasant des données sur une partie d'une zone sur laquelle des données précédentes ont été enregistrées.

12. Procédé selon la revendication 1, dans lequel dans un cas où une région défectueuse est générée en raison d'une erreur d'adresse ou d'une erreur d'ID, le procédé comprend la réalisation de la liaison plutôt entre un bout de la région défectueuse et un début d'exécution d'une grappe physique après la région défectueuse.

13. Procédé selon l'une quelconque des revendications précédentes, dans lequel le disque optique est l'un parmi un disque réinscriptible ou un disque inscriptible.
